# EUROPÄISCHE PATENTSCHRIFT

(11) **EP 1 693 177 B1**
(45) Veröffentlichungstag und Bekanntmachung des Hinweises auf die Patenterteilung: **17.09.2008**
(21) Anmeldenummer: 06002031.0
(22) Anmeldetag: 01.02.2006
(51) Int. Cl.: B29C 45/27, B29C 45/73, H05B 3/42

(54) **Heizzylinder zum Aufschieben auf eine Spritzdüse für eine Spritzgiessanlage**
Heating cylinder to put around an injection nozzle for an injection moulding machine
Cylindre de chauffage se montant autour d'une buse d'injection pour une presse à injecter

(30) Priorität: 18.02.2005 DE 102005007398
(43) Veröffentlichungstag der Anmeldung: 23.08.2006
(73) Patentinhaber: INCOE INTERNATIONAL, INC., 63322 Rödermark (DE)
(72) Erfinder: EMICH, Jürgen, 64846 Gross-Zimmern (DE)
(74) Vertreter: Boecker, Joachim

(56) Entgegenhaltungen:
- EP-A2- 1 252 998
- WO-A-03/066309

## Beschreibung

Die vorliegende Erfindung bezieht sich auf einen Heizzylinder zum Aufschieben auf eine Spritzdüse für eine Spritzgießanlage gemäß dem Oberbegriff des Anspruches 1.

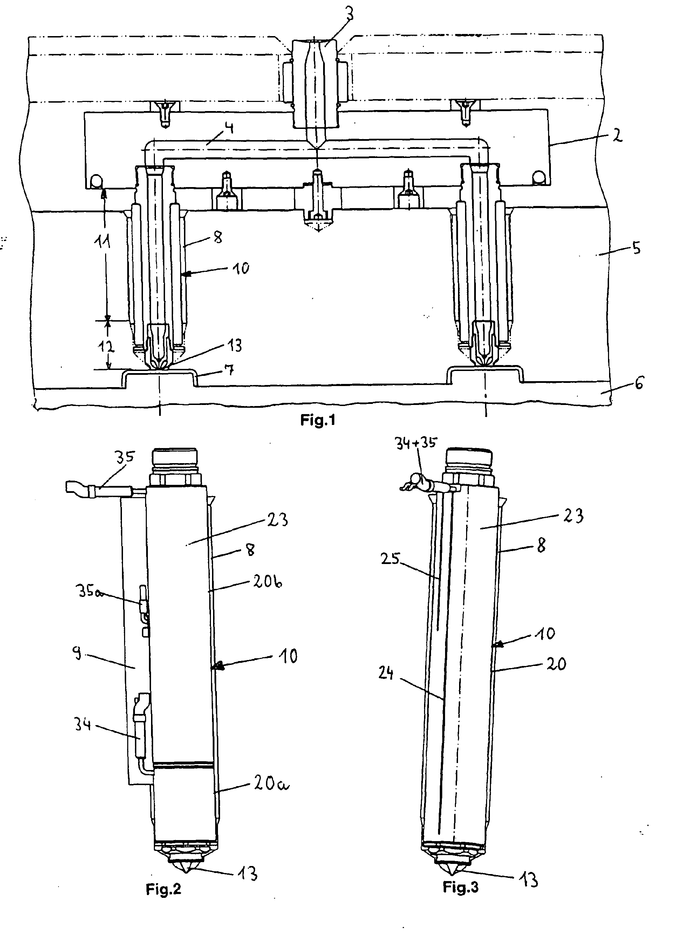

Zum Verständnis des der Erfindung zugrunde liegenden Problems wird auf die Figuren 1 und 2 Bezug genommen. Figur 1 zeigt in schematischer Darstellung eine Spritzgießanlage. Von einer über eine Angußbuchse 3 angeschlossenen Spritzgießmaschine wird heiße Schmelze durch die Fließkanäle 4 eines beheizten Heißkanal-Verteilerblocks 2 zu den Düsen 10 geleitet. Die Spritzdüsen 10 befinden sich in den Aufnahmebohrungen 8 im Spritzseitenteil 5 des Werkzeugs 5,6. Die Spritzdüsen sind über den sogenannten Anschnitt 13 an die Kavitäten 7 angeschlossen, in denen die Spritzteile geformt werden und die sich gewöhnlich im Auswurfseitenteil 6 des Werkzeugs befinden.

Zwischen der erforderlichen Temperatur der Schmelze und der des Werkzeugs besteht im Betrieb ein beträchtlicher Unterschied. Beispielsweise beträgt die Verarbeitungstemperatur der Schmelze 250°C, während das Werkzeug eine Temperatur von 50°C hat. Dieser Temperaturunterschied hat insbesondere an den Berührungsstellen zwischen Düse und Werkzeug einen erheblichen Wärmeabfluß von der Düse zur Folge. Dieser Wärmeverlust muß durch Beheizung der Düsen ständig ausgeglichen werden. Diese Beheizung erfolgt mittels auf die Düsen aufschiebbarer Heizzylinder, auf die sich die vorliegende Erfindung bezieht. Die kritischste Stelle hinsichtlich der Gefahr einer Unterkühlung der Schmelze liegt am Anschnitt 13, da hier die Wärmekapazität des umgebenden Düsenmaterials infolge des kleiner werden Durchmessers der Düse gering ist und ein inniger Kontakt der Düse mit dem Werkzeug besteht.

Diese Verhältnisse erfordern, daß die Beheizung der Düse im Anschnittbereich 12 stärker sein muß als im Schaftbereich 11. Die hierfür im Anschnittbereich 12 erforderliche Wärmezufuhr ist auch stark abhängig von den Betriebsbedingungen, dem Material von Schmelze und Werkzeug und der Gestalt des Anschnitts 13. Außerdem muß die Wärmezufuhr gut regelbar sein, da die Bandbreite der Verarbeitungstemperatur mancher Schmelzen sehr schmall ist. Ferner muß beispielsweise im kalten zustand des Werkzeugs dem Anschnittsbereich 12 eine erhöhte Wärmemenge zugeführt werden.

Es ist bereits bekannt, die Düsen mit zwei getrennten Heizzylindern 20a, 20b (Figur 2) auszurüsten, und zwar einen für den Anschnittbereich 12 und einen für den Schaftbereich 11. Die Heizleiter beider Heizzylinder sind unabhängig voneinander steuerbar beziehungsweise regelbar. Die Heizzylinder bestehen im wesentlichen aus einen hohlen Tragzylinder, der mit einer Spiralnut für die Aufnahme einer Heizpatrone versehen ist, in welche ein Heizleiter eingebettet ist. Die Steigung der Spiralnut auf den Tragzylinder des Heizzylinders für den Anschnittbereich 12 ist in der Regel kleiner als die Steigung der Spiralnut auf dem Tragzylinder für den Schaftbereich 11. An der Außenseite der Heizzylinder befindet sich eine metallische Schutzmantel 23. In Figur 2 ist außer der Abbildung der Düse auch die Aufnahmebohrung 8 im Werkzeug angedeutet.

Der Nachteil dieser bekannten Lösung besteht zum einen darin, daß zwei getrennte Heizzylinder 20a, 20b erforderlich sind. Ein weiterer wesentlicher Nachteil besteht darin, daß der elektrische Anschluß 34 des Heizzylinders 20a für den Anschnittbereich ziemlich weit vorne in Richtung zum Anschnitt liegt, so daß zu seiner Unterbringung in der Aufnahmebohrung 8 des Werkzeug-Spritzseitenteils 5 eine entsprechende Längsnut 9 (Figur 2) vorgesehen werden muß. Diese Notwendigkeit kann, abgesehen von dem zusätzlichen Aufwand, bei manchen Werkzeugen auch zu Platzproblemen führen. Ferner besteht eine erhebliche Beschädigungsgefahr für den elektrischen Anschluß 34 beim Einführen der Düsen in die Aufnahmebohrungen 8 des Werkzeugs. In Figur 2 bezeichnet 35a den Anschluß an den Temperaturfühler für den Heizzylinder 20b. Der entsprechende Temperaturfühler für den Heizzylinder 20a ist nicht dargestellt.

EP-A-1252998 offenbart einen Heizzylinder gemäß dem Oberbegriff des Anspruches 1

Der vorliegenden Erfindung liegt die Aufgabe zugrunde, die bekannte Beheizungsanordnung der Düse in vorteilhafter Weise weiter zu entwickeln.

Zur Lösung dieser Aufgabe wird ein Heizzylinder gemäß dem Oberbegriff des Anspruches 1 vorgeschlagen, welcher die im kennzeichnenden Teil des Anspruches 1 genannten Merkmale hat.

Weitere Ausgestaltungen der Erfindung sind in den Unteransprüchen genannt.

Durch die erfindungsgemäße Lösung ist nur noch ein Heizzylinder anstelle von zwei getrennten Heizzylindern wie bei der bekannten Lösung erforderlich. Damit entfällt der elektrische Anschluß 34, der beim Stand der Technik im Anschnittbereich aus dem zylindrischen Körper des Heizzylinders radial nach außen hervortritt. Folglich kann auf die Aufnahmenut 9 für diesen Anschluß in der Düsen-Aufnahmebohrung 8 des Werkzeugs verzichtet werden. Ferner wird der Platzbedarf im Kabelkanal der Anlage reduziert, da nur ein ISO-Schlauch für zwei Heizungsanschlüsse erforderlich ist. Diese Vereinfachungen sind mit einer erheblichen Kostenersparnis verbunden.

Anhand der Figuren soll die Erfindung näher erläutert werden. Es zeigen:
- Figur 1: skizzenhaft eine Spritzgießanlage nach dem Stande der Technik,
- Figur 2: eine Spritzdüse mit zwei getrennten Heizzylindern nach dem Stande der Technik,
- Figur 3: eine Spritzdüse mit einem Ausführungsbeispiel eines einheitlichen Heizzylinders gemäß der Erfindung,
- Figur 4: ein Ausführungsbeispiel einer Heizpatrone für einen Heizzylinder gemäß der Erfindung,
- Figur 5: ein Ausführungsbeispiel des Tragzylinders für einen Heizzylinder gemäß der Erfindung.

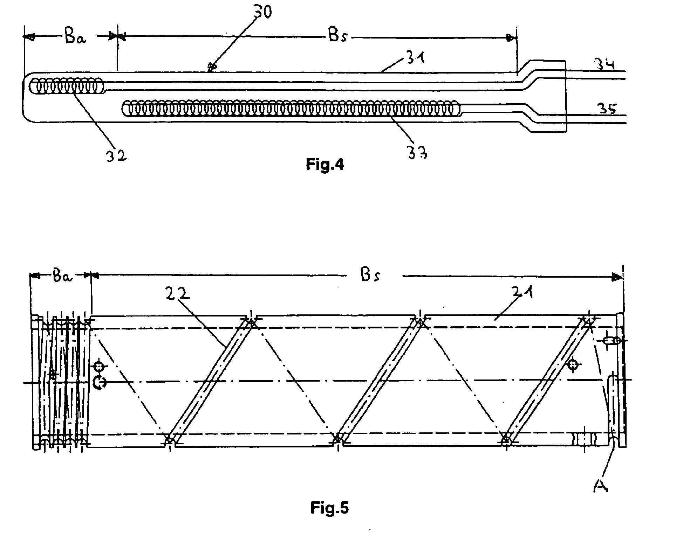

Das in Figur 4 gezeigte Ausführungsbeispiel einer Heizpatrone gemäß der Erfindung enthält zwei Heizleiter 32 und 33, die zu spiralförmigen Heizwendeln gewickelt sind. Die Heizwendeln sind in einer Metallhülse 31 untergebracht, in der sie in einer nicht dargestellten elektrischen Isoliermasse eingebettet sind. Die Heizwendel 32 befindet sich im vorderen (werkzeugseitigen) Teil der Metallhülse 31 und die Heizwendel 33, die räumlich und galvanisch von der Heizwendel 32 getrennt ist, im übrigen Teil der Metallhülse 31. Die elektrischen Anschlüsse 34 und 35 beider Heizwendeln sind an dem der Heizwendel 32 abgewandten Ende aus der Metallhülse 31 herausgeführt.

Die Heizpatrone 30 ist im Verhältnis zu ihrem Durchmesser sehr lang, was in Figur 4, die nur symbolisch den Aufbau der Heizpatrone zeigt, nicht zum Ausdruck kommt. Sie gleicht einer langen plastisch verformbaren Stange oder einem Draht. Diese Heizpatrone wird auf den in Figur 5 gezeigten hohlen Tragzylinder 21 gewickelt. Zur Führung der aufzuwickelnden Heizpatrone ist die Außenseite des Tragzylinders 21 mit einer spiralförmigen Nut 22 versehen, die in ihrem anschnittseitigen Bereich Ba eine bedeutend kleinere Steigung aufweist als in ihrem Schaftbereich Bs. Die Längen der Heizwendeln 32, 33 sind so auf den Tragzylinder abgestimmt, daß die dicht beeinanderliegenden Windungen der Spiralnut 22 im Anschnittsbereich Ba im wesentlichen von der Heizwendel 32 eingenommen werden, und die mit großer Steigerung versehenen Windungen der Spiralnut 22 im Schaftbereich Bs im wesentlichen von der Heizwendel 33 eingenommen werden. Die Anschlüsse 34 und 35 beider Heizwendeln werden bei A (Figur 5) aus dem Heizzylinder herausgeführt. Radial außerhalb des mit der Heizpatrone 30 versehenen Tragzylinders 21 ist zum Schutz noch ein in Figur 5 nicht dargestellter, aber in Figur 3 bezeichneter Schutzmantel 23 vorhanden.

Figur 3 zeigt eine Spritzdüse, auf die der hohle Heizzylinder gemäß der Erfindung aufgeschoben ist. Man erkennt, daß die komplette Spritzdüse 10 auf ihrer gesamten Länge keine radial vorspringenden Teile aufweist wie die bekannte Spritzdüse gemäß Figur 2. Man erkennt ferner, daß die angedeutete Aufnahmebohrung 8 des Werkzeugs ohne die beim Stand der Technik erforderliche Nut 9 (siehe Figur 2) auskommt. Die elektrischen Anschlüsse 34, 35 beider Heizwendeln befinden sich an dem dem Werkzeug abgewandten Ende der Düse außerhalb der Aufnahmebohrung 8. Die dünnen Anschlußleiter für die Temperaturfühler im Anschnittsbereich und im Schaftbereich liegen in je einer kleinen Längsnut 24 bzw. 25 im Schutzmantel 23, wodurch es in radialer Richtung zu keiner Erweiterung kommt.

Die Beheizung kann, wie auch bereits im Stande der Technik, im Anschnittbereich und im Schaftbereich der Düse getrennt gesteuert oder geregelt werden. Die größere Dichte der Windungen der Heizpatrone 30 auf dem Tragzylinder 21 im Anschnittbereich Ba ist daher im Prinzip nicht notwendig. Sie ist jedoch zweckmäßig, da bei gleicher Steigung in beiden Bereichen die Strombelastbarkeit der Heizwendel 32 höher als die der Heizwendel 33 sein müßte, mit der Folge, daß die Heizwendeln in beiden Bereichen elektrisch unterschiedlich dimensionniert werden müßten.

## Patentansprüche

1. Heizzylinder zum Aufschieben auf eine Spritzdüse für eine Spritzgießanlage, zu welchem Heizzylinder (20) ein hohler Tragzylinder (21) gehört, auf dessen Außenseite eine langgestreckte Heizpatrone spiralförmig aufgewickelt ist, **dadurch gekennzeichnet, daß** die Heizpatrone (30) einen ersten (32) und einen zweiten (33) elektrisch beheizbare Heizleiter enthält, welche Heizleiter (32,33) galvanisch voneinander getrennt sind und im wesentlichen in verschiedenen Bereichen (Ba,Bs) in Längsrichtung der Heizpatrone (30) angeordnet sind, wobei der erste Heizleiter (32) für die Beheizung des Anschnittbereiches der Düse und der zweite Heizleiter für die Beheizung des Schaftbereiches der Düse bestimmt ist.

2. Heizzylinder nach Anspruch 1, **dadurch gekennzeichnet, daß** die elektrischen Anschlüsse (34,35) der beiden Heizleiter (32,33) an demjenigen Ende der Heizpatrone herausgeführt sind, welches dem erste Heizleiter (32) abgewandt ist.

3. Heizzylinder nach Anspruch 1 oder 2, **dadurch gekennzeichnet, daß** die Heizleiter (32,33) als spiralförmige Heizwendeln ausgebildet sind.

4. Heizzylinder nach einem der vorhergehenden Ansprüche, **dadurch gekennzeichnet, daß** die Außenseite des Tragzylinders (21) in an sich bekannter Weise mit einer Spiralnut (22) versehen ist, in die die genannte Heizpatrone (30) eingelegt ist.

5. Heizzylinder nach Anspruch 4, **dadurch gekennzeichnet, daß** die genannte Spiralnut (22) in dem Bereich (Ba), in welchen der erste Heizleiter (32) liegt, eine kleinere Steigung aufweist als im restlichen Bereich (Bs).

6. Heizzylinder nach einem der vorhergehenden Ansprüche, **dadurch gekennzeichnet, daß** die Außenseite eines den Tragzylinder (21) umgebenden Schutzmantels (23) mit Längsnuten (24,25) versehen ist zur Aufnahme der Zuleitungen zu den Temperaturfühlern des Anschnittsbereiches und des Schaftbereiches der Düse.

## Claims

1. Heating cylinder for sliding upon a sprue nozzle for an injection molding installation, which heating cylinder (20) comprises a hollow bearing cylinder (21), on the outer side of which is coiled up an extended heating cartridge, **characterized in that** the heating cartridge comprises a first (32) and a second (33) electrically heatable heating conductor, which heating conductors (32,33) are galvanically separated from each other and are located essentially on different areas (Ba,Bs) in the longitudinal direction of the heating cartridge (30), said first heating conductor (32) being provided for the heating of the gate-area of the nozzle and the second heating conductor being provided for the heating of the shaft-area of the nozzle.

2. Heating cylinder according to claim 1, **characterized in that** the electrical power points (34,35) of the two heating conductors (32,33) are led out at that end of the heating cartridge which faces away from the first heating conductor (32).

3. Heating cylinder according to claim 1 or 2, **characterized in that** the heating conductors (32,33) are formed as spirals.

4. Heating cylinder according to any of the preceding claims, **characterized in that** the outer side of the bearing cylinder (21) is, in a manner known per se, provided with the spiral slot (22) which houses said heating cartridge (30).

5. Heating cylinder according to claim 4, **characterized in that** said spiral slot (22)is provided with a smaller gradient in the area (Ba), which houses the first heating conductor (32), than in the remaining area (Bs).

6. Heating cylinder according to any of the preceding claims, **characterized in that** the outer side of a protected casing, which surrounds the bearing cylinder (21), is provided with longitudinal slots (24,25) for accommodating the leads to the temperature sensors of the gate-area and the shaft-area of the nozzle.

## Revendications

1. Cylindre de chauffage à enfiler sur une buse d'injection pour une presse à injecter, cylindre( 20 ) de chauffage dont fait partie un cylindre ( 21 ) support creux, sur la face extérieure duquel est enroulée en spirale une cartouche de chauffage s'étendant en longueur, **caractérisé en ce que** la cartouche ( 30 ) de chauffage comporte un premier ( 32 ) et un deuxième ( 33 ) conducteur de chauffage pouvant être chauffé électriquement, conducteurs ( 32, 33 ) de chauffage qui sont séparés galvaniquement l'un de l'autre et qui sont disposés essentiellement dans des parties ( Ba, Bs ) différentes dans la direction longitudinale de la cartouche ( 30 ) de chauffage, le premier conducteur ( 32 ) de chauffage étant destiné à chauffer la partie d'attaque de la buse et le deuxième conducteur de chauffage étant destiné à chauffer la partie de fût de la buse.

2. Cylindre de chauffage suivant la revendication 1, **caractérisé en ce que** les bornes ( 34, 35 ) électriques des deux conducteurs ( 32, 33 ) de chauffage sortent de l'extrémité de la cartouche de chauffage qui est éloignée du premier conducteur ( 32 ) de chauffage.

3. Cylindre de chauffage suivant la revendication 1 ou 2, **caractérisé en ce que** les conducteurs ( 32, 33 ) de chauffage sont constitués sous la forme de filaments de chauffage en spirale.

4. Cylindre de chauffage suivant l'une des revendications précédentes, **caractérisé en ce que** la face extérieure du cylindre ( 21 ) support est munie d'une façon en soi connue d'une rainure ( 22 ) en spirale, dans laquelle la dite cartouche ( 30 ) de chauffage est insérée.

5. Cylindre de chauffage suivant la revendication 4, **caractérisé en ce que** la dite rainure ( 22 ) en spirale a dans la partie ( Ba ) dans laquelle se trouve le premier conducteur ( 32 ) de chauffage un pas plus petit que dans la partie ( Bs ) restante.

6. Cylindre de chauffage suivant l'une des revendications précédentes, **caractérisé en en ce que** la face extérieure d'une enveloppe ( 23 ) de protection entourant le cylindre ( 21 ) support est munie de rainures ( 24, 25 ) longitudinales de réception des lignes allant aux sondes de température de la partie d'attaque et de la partie de fût de la buse.
